(19) Europäisches Patentamt
European Patent Office
Office européen des brevets

(11) **EP 4 239 434 A1**

(12) **EUROPEAN PATENT APPLICATION**

(43) Date of publication:
**06.09.2023 Bulletin 2023/36**

(21) Application number: **23159515.8**

(22) Date of filing: **01.03.2023**

(51) International Patent Classification (IPC):
**G05D 1/10** (2006.01)

(52) Cooperative Patent Classification (CPC):
**G05D 1/104; F41H 13/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.03.2022 US 202263315169 P**
**03.01.2023 US 202318092535**

(71) Applicant: **Rockwell Collins, Inc.**
**Cedar Rapids, IA 52498 (US)**

(72) Inventors:
• **KRAWIEC, Bryan M.**
**Ashburn (US)**
• **JAKUSZ, Jason J.**
**Nixa (US)**

(74) Representative: **Dehns**
**St. Bride's House**
**10 Salisbury Square**
**London EC4Y 8JD (GB)**

(54) **PRIMARY ASSET ESCORT THROUGH THREATENED AIRSPACE BY AN AUTONOMOUS AERIAL VEHICLE TEAM**

(57) A system and method for formation flying includes a primary asset accompanied by a plurality of secondary assets. The secondary assets fly around the primary asset in a predetermined formation to achieve a desired degree to range and scanning. The secondary assets are not mission critical such that if some or all are lost to attrition, the primary asset may continue the mission or abort with a high probability of survival. The primary asset may include a high value payload, either in terms of equipment expense or mission criticality. Furthermore, the secondary assets may autonomously reposition and reorient according to mission priorities or the loss of one or more of the secondary assets. The primary asset and secondary assets implement algorithms and software functions to allow the primary asset to navigate through airspace without being harmed by any known or yet to be known lethal threats.

FIG. 1

**Description**

<u>PRIORITY</u>

The present application claims the benefit under 35 U.S.C. § 119(e) of U.S. Provisional App. No. 63/315169 (filed March 1, 2022)..

<u>BACKGROUND</u>

Automated multi-vehicle teaming is desirable for simultaneously supervising multiple unmanned assets. Existing methodologies for such teaming are not modular or expandable. It would be advantageous to have a system and method for implanting a modular, expandable multi-vehicle teaming system.

<u>SUMMARY</u>

In one aspect, embodiments of the inventive concepts disclosed herein are directed to a system and method of formation flying where a primary asset is accompanied by a plurality of secondary assets. The secondary assets fly around the primary asset in a predetermined formation to achieve a desired degree to range and scanning. The secondary assets are not mission critical such that if some or all are lost to attrition, the primary asset may continue the mission or abort with a high probability of survival.

In a further aspect, the primary asset may include a high value payload, either in terms of equipment expense or mission criticality. Furthermore, the secondary assets may autonomously reposition and reorient according to mission priorities or the loss of one or more of the secondary assets.

The primary asset and secondary assets implement algorithms and software functions to allow the primary asset to navigate through airspace without being harmed by any known or yet to be known lethal threats.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

<u>BRIEF DESCRIPTION OF THE DRAWINGS</u>

The numerous advantages of the embodiments of the inventive concepts disclosed herein may be better understood by those skilled in the art by reference to the accompanying figures in which:

FIG. 1 shows a block diagram of a system useful for implementing team formation flying according to an exemplary embodiment;

FIG. 2 shows block diagrams of formation flying with five secondary assets with various detection radii according to exemplary embodiments;

FIG. 3 shows block diagrams of formation flying with three and eight secondary assets having various detection radii according to exemplary embodiments;

FIG. 4 shows block diagrams of bi-criterion optimization with eight secondary assets according to exemplary embodiments;

FIG. 5 shows a block diagram of team flying avoidance of a detected lethal threat according to an exemplary embodiment;

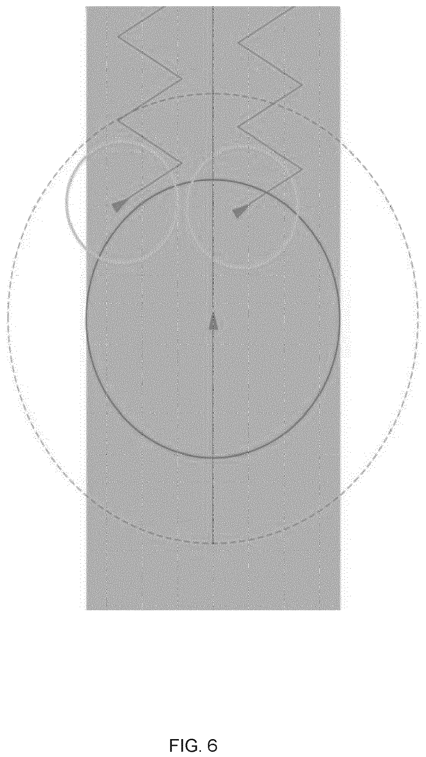

FIG. 6 shows a block diagram of a forward scouting method according to an exemplary embodiment;

FIG. 7 shows a block diagram of a directional shielding method according to an exemplary embodiment;

<u>DETAILED DESCRIPTION</u>

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system and method of formation flying where a primary asset is accompanied by a plurality of secondary assets. The secondary assets fly around the primary asset in a predetermined formation to achieve a desired degree to range and scanning. The secondary assets are not mission critical such that if some or all are lost to attrition, the primary asset may continue the mission or abort with a high probability of survival. The primary asset may include a high value payload, either in terms of equipment expense or mission criticality. Furthermore, the secondary assets may autonomously reposition and reorient according to mission priorities or the loss of one or more of the secondary assets. The primary asset and secondary assets implement algorithms and software functions to allow the primary asset to navigate through airspace without being harmed by any known or yet to be known lethal threats.

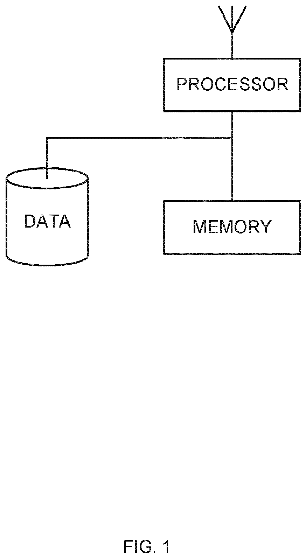

Referring to FIG. 1, a block diagram of a system useful for implementing team formation flying according to an exemplary embodiment is shown. The system, embodied in each of a set of autonomous aircraft, includes a processor 100, memory 102 for embodying processor executable code, and a data communication element 104 (i.e., an antenna and corresponding data communication hardware which may include a software defined radio) for communicating with other autonomous aircraft in the set.

The set of autonomous aircraft define a primary asset (i.e., a primary autonomous aircraft in the set) and a set of secondary assets. Each processor 100 in each asset is configured to communicate with the other assets and issue instructions according to algorithms that may be stored in a data storage element 106 (i.e., a persistent solid state storage device).

In at least one embodiment, each asset may be configured to operate in one of two modes: a first mode that defines the maneuvering of the primary asset and a second mode that defines the maneuvering of the secondary assets. The secondary assets fly in formation with the primary asset at strategically chosen offsets so that they shield the primary asset from any lethal threats. In either mode, each processor 100 is configured to enact such maneuvering via aircraft control surfaces 108.

In at least one embodiment, the primary asset may communicate route and path updates to the secondary assets via the data communication element 104 such that the set of autonomous aircraft may maintain a formation even during complicated maneuvers. Alternatively, or in addition, secondary assets may communicate route or path changes in real-time as the secondary assets detect threats in the field. It may be understood that within the context of the present application, the distinction between primary assets and secondary assets is primarily one of value based on mission parameters: primary assets are those that are necessary or more advantageous for a current mission while secondary assets are generally more sacrificial within the limitations of the current mission. Primary assets may be, are not necessarily overriding in terms of mission decisions. For example, a forward positioned secondary asset may be in a better position to direct the overall route of the set of autonomous aircraft.

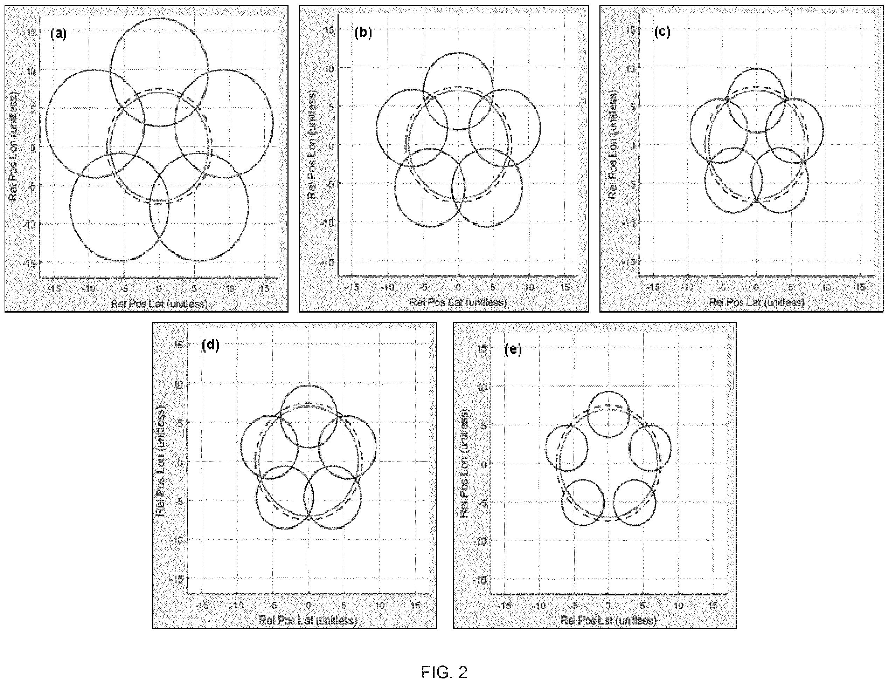

Referring to FIG. 2, block diagrams 200, 202, 204, 206, 208 of formation flying with five secondary assets 218 with various detection radii according to exemplary embodiments are shown. In at least one embodiment, the primary asset 212 is assumed to be at the center of the plots and has a predefined lethality range 216 (i.e., if the primary asset 212 gets within that range of a threat, the primary asset 212 will be destroyed). The secondary assets 218 are positioned periodically about the primary asset 212, at a distance that may be defined by each secondary asset's 218 threat detection range 210 (i.e., a range within which the secondary asset 218 can detect the presence of any threat). In at least one embodiment, the primary asset 212 may define an elicit range 214, generally larger than the lethality range 216.

In at least one embodiment, the elicit range 214 would be relevant in RF elicit / detect scenarios. An RF reconnaissance mission may have assets 212, 218 with different payloads, some with the capability to elicit an RF response from an enemy and others with the ability to detect enemy emissions and locate them; eliciting assets, by their nature and mode of operation, are likely to be targeted by an enemy. The detecting assets (the secondary assets 218) can be utilized to locate the enemy before the eliciting asset (the primary asset 212) enters a lethal range.

In an electro-optical / infrared reconnaissance or mapping mission, one or more primary assets 212 may have a sensitive and relatively expensive mapping payload. A plurality of secondary assets 218 may be used to ensure the primary assets' 212 safe passage through a region. Similarly, in an attack / strike mission, one or more primary assets 212 may carry a high value munition. To increase the likelihood of getting the high value munition within an acceptable firing range of a target, secondary assets 218 may protect the primary assets 212 by intercepting threats; sacrificially if necessary.

In at least one embodiment, lethality and payload capabilities may be based primarily on range, omnidirectionality, etc. Such simplification may be useful because many real-world situations could be abstracted to this formulation (e.g. approximating more complex detection / lethality / etc. footprints as bounding circles, adding buffers to account for timing delays, and the like); the operation of this tactic is conservative and hence favorable (e.g. assuming threats can come from any direction).

In at least one embodiment, for directional payloads, the assets 212, 218 may superpose their motion or the payloads' motions with sweeps or weaves to create a more omnidirectional footprint. In at least one embodiment, for highly directional payloads, sweep and weave geometries may be defined for the assets 212, 218.

Different combinations of detection radii and optimal flying geometries are shown for the same lethality range 216. Where there are enough secondary assets 218, and their detection ranges 210 are large enough (as in the first, second, and third block diagrams 200, 202, 204), the secondary assets 218 surround the primary asset 212 in a regular polygon geometry at a distance where the intersection points between the detection ranges 210 are as far away from the primary asset 212 as possible. Effectively, the primary asset 212 is completely surrounded by detection ranges 210, and lethal threats will be detected from as far away as possible.

For smaller detection ranges 210 (as in the fourth and fifth block diagrams 206, 208), it may be no longer possible to fully enclose the lethality range 216. The secondary assets 218 may seek to maximize the circumference of the lethality range 216 that can be covered, either by withdrawing to the primary asset 212 close enough that the detection ranges 210 overlap somewhere within the lethality range 216, or by maintaining a distance from the primary asset 212 such that the detection range 210 of that covers the maximum possible arc length of the lethality range 216 perimeter. It may be appreciated that the detection ranges 210 may shrink based on external conditions (i.e., weather, jamming, etc.), or the total available detection range 210 of all secondary assets 218 may shrink based on attrition of secondary assets 218.

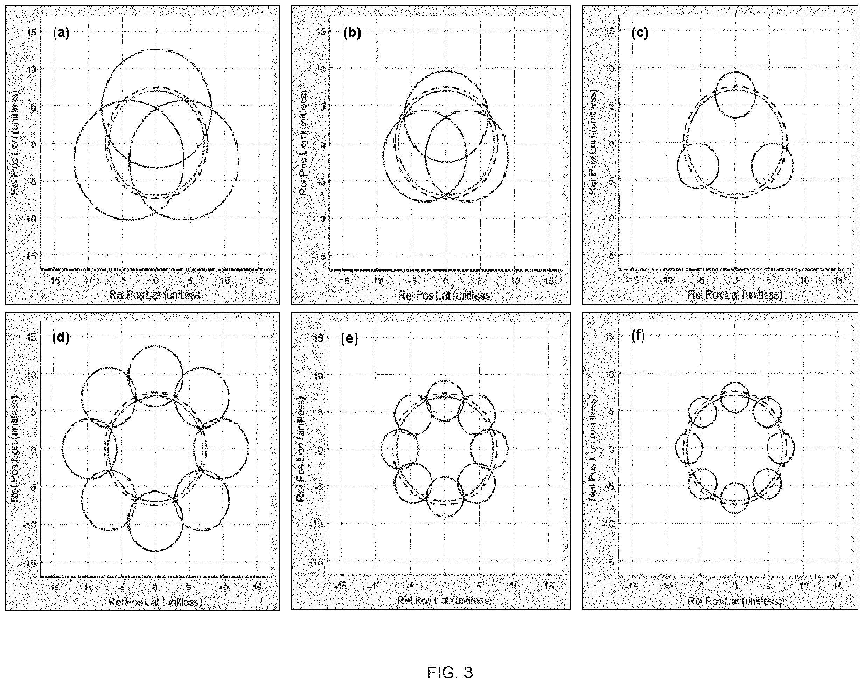

Referring to FIG. 3, block diagrams 300, 302, 304, 306, 308, 310 of formation flying with three and eight secondary assets 318 having various detection ranges 320 according to exemplary embodiments are shown. In at least one embodiment, where primary assets 312 and secondary assets 318 are engage in eliciting a threat, the optimal disposition of assets 312, 318 produces very little overlap between the elicit range 314 and detection ranges 320. Such disposition is disadvantageous because the assets 312, 318 can only detect an elicited threat, and the corresponding threat would necessarily be in the intersection of the elicit range 314 and detection ranges 320. Therefore, it is critical that the assets 312, 318 optimize a tradeoff between maximizing safety (i.e., expanding the detection zone around and beyond the primary asset lethality range 316) and maximizing elicited detection area (i.e., creating more overlap between the elicit range 314 and detection ranges 320).

In some exemplary embodiments, a system may include one primary asset 312 and three secondary assets 318 (as shown in a first, second, and third block diagram 300, 302, 304). In a first scenario (as in the first block diagram 300), three secondary assets 318 are capable of full coverage of the primary asset 312 and seek to expand coverage around the primary asset 312 lethal range 316 as far as possible. In a second scenario (as in the second block diagram 302), secondary assets 318 just barely cover the lethal range 316. In a third scenario (as in the third block diagram 304), secondary assets 318 cannot cover all angles and may make the decision to cover as much of the circumference of the primary asset 312 lethality range 316 as possible. Similar scenarios are shown in a fourth, fifth, and sixth block diagram 306, 308, 310 for a team of one primary asset 312 and eight secondary assets 318.

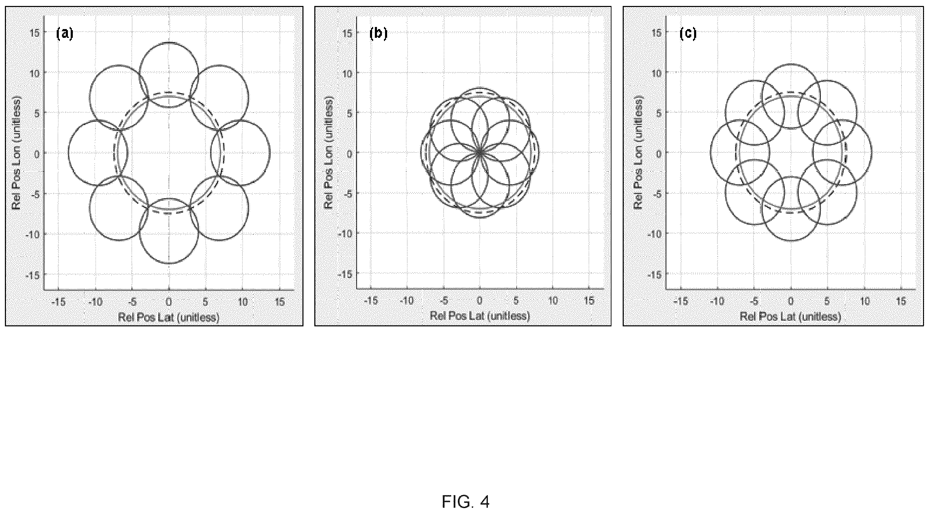

Referring to FIG. 4, block diagrams 400, 402, 404 of bi-criterion optimization with eight secondary assets 418 according to exemplary embodiments are shown. In at least one embodiment, assets 412, 418 formulate a bi-criterion optimization with a weighting to control how much priority is placed on the first objective (expanding the detection zone around and beyond the primary asset lethality range) and the second objective (creating more overlap between the elicit range 414 and the detection range 410), provided the lethality range 416 is fully covered. In a first scenario (as in a first block diagram 400) more weight is given to a first objective; in a second scenario (as in a second block diagram 402), more weight is given to a second objective; and in a third scenario (as in a third block diagram 404), a weighting is given as the knee of the Pareto maximal value front, which is often recognized as a reasonable compromise between multiple criteria.

In at least one embodiment, the behavior of the secondary assets 418 is defined to determine a formation flying geometry offset (i.e., a distance between the primary asset 412 and each secondary assets 418, and a distance between neighboring secondary assets 418 or angular disposition of secondary assets 418 around the primary asset 412) either by online optimization or looking up values in a predefined table based upon number of assets 412, 418, detection range 410, elicit range 414, lethality range 416, and a identifiers of assets 412, 418 in the team. Such table may be generated offline and included in the software at compile time or runtime.

The assets 412, 418 maintain the formation flying geometry, at the defined offsets, and execute mission parameters. If team composition changes (i.e., assets 412, 418 go offline or new assets 412, 418 join the team), each asset 412, 418 may recalculate or lookup new offsets to accommodate the team composition change.

In one specific embodiment, formation flying geometry offsets are derived according to an algorithm wherein an offset is composed of an offset angle and an offset range (in some valid coordinate system such as a north / east system organized about the direction of travel of the primary asset 412). The offset angle for a particular secondary asset 418 may be based on regular polygons and the secondary asset's unique ID ("ID") on the team:

$$theta = \frac{360}{numVehicles} * mod(ID, numVehicles)$$

where numVehicles is the number of secondary assets 418, ID is an integer in the range [1, numVehicles] and theta is in units of degrees. The offset range may be based on a solution to an optimization problem to maximize an intersection distance over a set of offset range values, within certain constraints such as the intersection distance being greater or equal to the lethality range 416, where the intersection distance is the distance from the primary asset 412 where the detection ranges 410 intersect each other (e.g., the farthest intersection point).

If a mission scenario requires both a primary asset 412 to elicit and secondary assets 418 to detect, the assets 412, 418 may determine a lambda value ("$\lambda$") of a Pareto curve where the reward to be maximized is:

$$reward = \left(\frac{intersection\ distance}{lethality\ range}\right) + \lambda$$

$$* \left(\frac{area\ of\ overlap\ between\ detection\ range\ and\ elicit\ range}{area\ of\ elicit\ range}\right)$$

If the mission scenario does not require both elicit and detect, $\lambda$ may be set to zero. Then a maximum reward is computed with $\lambda$ to determine an offset range where the intersection distance is greater than or equal to the lethality range 416.

If those calculations are not feasible, the assets 412, 418 may maximize perimeter overlap of the primary asset 412 lethality range perimeter with detection range areas of the secondary assets 418 to compute the desired offset range.

In at least one embodiment, offset ranges and offset angles may be calculated independently by each asset 412, 418. For example, each secondary asset 418 my calculate its own offset range and offset angle, and maintain its position thereafter, independent of any external control mechanism. Alternatively, or in addition, a single asset, such as the primary asset 412, may perform the calculations and deliver the resulting offset ranges and offset angles to the secondary assets 418. In at least one embodiment, the assets 412, 418 may remain in substantially constant data communication to share each asset's 412, 418 current relative position and trajectory, and any external information gathered by the assets 412, 418.

It may be appreciated that while embodiments disclosed and shown herein are directed to 2-dimensional disposition of assets 412, 418, 3-dimensions, spherical dispositions are also envisioned.

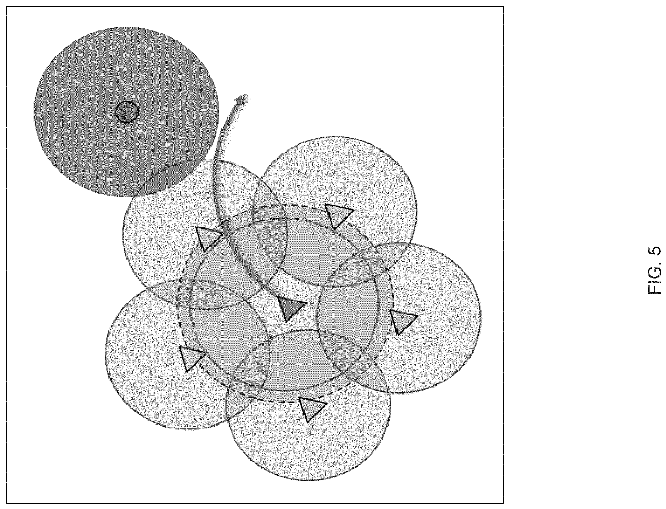

Referring to FIG. 5, a block diagram of team flying avoidance of a detected threat 522 according to an exemplary embodiment is shown. From a primary asset's 512 perspective, the primary asset 512 is sufficiently defended to fly a typical mission; however, the primary asset 512 is constrained to limit its maneuvering to stay within the maneuvering capabilities of the secondary assets 518 (i.e., imposing bank limits, acceleration limits, airspeed limits, or similar on the primary asset 512 so that none of the secondary assets 518 are out-maneuvered when flying at their offsets relative to the primary asset 512). The primary asset 512 must implement avoidance functionality where the primary asset 512 receives detected threats 522 communicated to it by the secondary assets 518 and establish a new trajectory 500 to steer around those detected threats 522 before the detected threats 522 penetrate the primary asset's lethality range 516.

In at least one embodiment, some level of symmetry and omni-directional geometry can be established. However, there may be cases where variations are advantageous. For example: in cases where gaps are present (such as the fourth and fifth block diagrams 206, 208 in FIG. 2 and the third and sixth block diagrams 304, 310 in FIG. 3), the secondary assets 518 may be made to orbit around the primary asset 512 at their offset range so that on average, all gaps will be covered, even if not instantaneously.

Referring to FIG., 6, a block diagram of a forward scouting method according to an exemplary embodiment is shown. In at least one embodiment, the number of secondary assets 618 may be insufficient to shield the primary asset 612 from all directions. Where there are gaps in the geometry, or when gaps appear due to attrition of the secondary assets 618, the assets 612, 618 may determine that the team is below some threshold number of secondary assets 618 and transition to a mode of operation whereby, instead of surrounding / shielding the primary asset 612, the secondary assets 618 move to a position corresponding to a forward position along the trajectory 600 of the primary asset 612 to act as a forward scouting team. Such positioning allows the secondary assets 618 to identify potential threats in the area in front of the primary asset's trajectory, where threats are most likely to be newly detected. Such embodiment is effective in cases of stationary or slowly moving ground threats, as their motion and lethality capabilities are more predictable than maneuverable aerial threats.

In at least one embodiment, each secondary asset 618 may define and execute a flight path 620 configured such that the detection range 610 of the secondary assets 618 cover a lethality range centered on the trajectory 600 of the primary assets 612 over time. Such flight path 620 may be generally defined to follow the trajectory 600 but is otherwise independent of the primary asset 612.

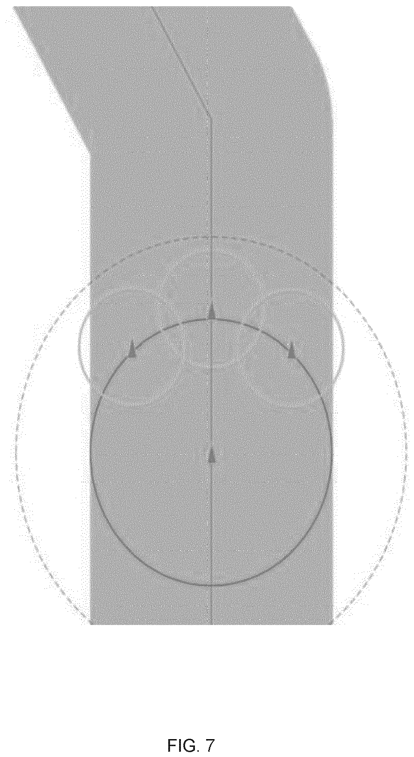

Referring to FIG. 7, a block diagram of a directional shielding method according to an exemplary embodiment is shown. If stationary or slowly moving ground threats are the primary or only potential threat, omni-directional shielding of the primary asset 712 may not be necessary. Secondary assets 718 may be disposed in a directional formation to prioritize shielding in front of the primary asset 712. The secondary assets 718 may be disposed along the trajectory 700 of the primary asset 712 such that their detection ranges 710 cover a lethality range centered about the trajectory 700.

Embodiments of the present application define the operation of an automated primary asset escort tactic from both the secondary asset and primary asset perspectives. From a command-and-control perspective, primary and secondary assets operate autonomously and inputs to the primary and secondary assets are only to enable the operation and provide details about team composition. The assets produce a set of guidance commands (i.e., airspeed, bank, etc.) computed continuously and in real-time for each of the assets. This methodology provides a tool for automated aerial teaming to enable complex missions with disparate payload packages.

Embodiments of the present application enable modular design and an integration paradigm to support large aerial teaming. The unique algorithms herein are applicable to scenarios including RF recon, EO / IR mapping, cargo delivery, strike / attack, etc.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. A system comprising:

   a primary autonomous aircraft including:

   at least one antenna (104); and
   at least one processor (100) in data communication with the at least one antenna (104) and a memory storing processor executable code for configuring the at least one processor (100) to:

   establish maneuvering limitations; and
   execute maneuvering commands according to a set of mission parameters within the maneuvering limitations; and

   a plurality of secondary autonomous aircraft, each including:

at least one antenna (104); and

at least one processor (100) in data communication with the at least one antenna (104) and a memory storing processor executable code for configuring the at least one processor (100) to:
establish a distance and orientation with respect to the primary autonomous aircraft based on a mission profile and a number of secondary autonomous aircraft to maximize detection coverage of a lethality range,

wherein:
the maneuvering limits are based on airspeed and maneuvering capabilities of the plurality of secondary autonomous aircraft.

2. The system of Claim 1, wherein the at least one processor (100) in each of the plurality of secondary autonomous aircraft is further configured to:

determine that one or more of the plurality of secondary autonomous aircraft is offline; and
establish a new distance and new orientation with respect to the primary autonomous aircraft based on the one or more offline secondary autonomous aircraft.

3. The system of Claim 2, wherein the at least one processor (100) in each of the plurality of secondary autonomous aircraft is further configured to:

determine that a number of secondary autonomous aircraft in the plurality of secondary autonomous aircraft has fallen below a threshold number;
identify a forward position corresponding to a leading edge of a flight path of the primary autonomous aircraft; and
dispose the corresponding secondary autonomous aircraft along the forward position.

4. The system of Claim 3, wherein the at least one processor (100) in each of the plurality of secondary autonomous aircraft is further configured to define a separate flight path for the corresponding secondary autonomous aircraft to provide detection coverage of a lethality range along the flight path over time.

5. The system of any preceding Claim, wherein establishing the distance and orientation further comprises:

identifying a class of threat type based on the mission profile; and
disposing the secondary autonomous aircraft according to the threat type.

6. The system of any preceding Claim, wherein establishing the distance and orientation comprises computing a reward value based on a ratio of a detection range intersection distance to the lethality range.

7. The system of any preceding Claim, wherein:

establishing the distance and orientation further comprises:

determining an elicit range; and
defining the distance and orientation such that a detection range covers the elicit range;

the primary autonomous aircraft further comprises an RF elicit payload; and
each of the secondary autonomous aircraft further comprises an RF detection payload.

8. An autonomous aircraft comprising:

at least one antenna (104); and
at least one processor (100) in data communication with the at least one antenna (104) and a memory (102) storing processor executable code for configuring the at least one processor (100) to:

operate the autonomous aircraft in a primary autonomous aircraft mode, wherein the at least one processor (100) is configured to:

establish maneuvering limitations; and
execute maneuvering commands according to a set of mission parameters within the maneuvering limitations; and

operate the autonomous aircraft in a secondary autonomous aircraft mode, wherein the at least one processor (100) is configured to:
establish a distance and orientation with respect to a primary autonomous aircraft based on a mission profile and a number of secondary autonomous aircraft in a team to maximize detection coverage of a lethality range,

wherein:
the maneuvering limits are based on airspeed and maneuvering capabilities of a team of secondary autonomous aircraft.

9. The autonomous aircraft of Claim 8, wherein the at least one processor (100), when in the secondary autonomous aircraft mode, is further configured to:

determine that one or more of the team of secondary autonomous aircraft is offline; and
establish a new distance and new orientation with respect to the primary autonomous aircraft based on the one or more offline secondary autonomous aircraft.

10. The autonomous aircraft of Claim 9, wherein the at least one processor (100), when in the secondary autonomous aircraft mode, is further configured to:

determine that a number of secondary autonomous aircraft in the team of secondary autonomous aircraft has fallen below a threshold number;
identify a forward position corresponding to a leading edge of a flight path of the primary autonomous aircraft; and
dispose the autonomous aircraft along the forward position, and optionally wherein the at least one processor (100), when in the secondary autonomous aircraft mode, is further configured to define a separate flight path to provide detection coverage of a lethality range along the flight path over time.

11. The autonomous aircraft of any of Claims 8 to 10, wherein establishing the distance and orientation further comprises:

identifying a class of threat type based on the mission profile; and
disposing the autonomous aircraft according to the threat type, or

wherein establishing the distance and orientation comprises computing a reward value based on a ratio of a detection range intersection distance to the lethality range.

12. A method comprising:

establishing maneuvering limitations of a primary autonomous aircraft based on airspeed and maneuvering capabilities of a plurality of secondary autonomous aircraft;
establishing a distance and orientation with respect to the primary autonomous aircraft based on a mission profile and a number of secondary autonomous aircraft to maximize detection coverage of a lethality range associated with the primary autonomous aircraft;
executing, by the primary autonomous aircraft, maneuvering commands according to a set of mission parameters within the maneuvering limitations; and
executing, by the secondary autonomous aircraft, maneuvering commands to maintain the distance and orientation.

13. The method of Claim 12, further comprising:

determining that one or more of the plurality of secondary autonomous aircraft is offline; and
establishing a new distance and new orientation with respect to the primary autonomous aircraft based on the one or more offline secondary autonomous aircraft.

14. The method of Claim 13, further comprising:

determining that a number of secondary autonomous aircraft in the plurality of secondary autonomous aircraft has fallen below a threshold number;
identifying a forward position corresponding to a leading edge of a flight path of the primary autonomous aircraft; and
disposing the corresponding secondary autonomous aircraft along the forward position, and optionally further comprising defining a separate flight path for the corresponding secondary autonomous aircraft to provide detection coverage of a lethality range along the flight path over time.

15. The method of any of Claims 12 to 14, wherein establishing the distance and orientation further comprises:

identifying a class of threat type based on the mission profile; and
disposing the secondary autonomous aircraft according to the threat type,
or wherein establishing the distance and orientation comprises computing a reward value based on a ratio of a detection range intersection distance to the lethality range, or wherein establishing the distance and orientation further comprises:
determining an elicit range; and
defining the distance and orientation such that a detection range covers the elicit range.

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 23 15 9515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/034633 A1 (YESHURUN YEHOSHUA [IL]) 3 February 2022 (2022-02-03) | 1-3,5-9, 11-13,15 | INV. G05D1/10 |
| Y | * paragraphs [0031], [0063], [0067]; figures 1,2 * | 4,10,14 | |
| X | US 2021/188431 A1 (ARAKI SHUNSUKE [JP]) 24 June 2021 (2021-06-24) * paragraph [0117]; figure 10 * | 1,8,12 | |
| Y | US 2018/321693 A1 (TU HAOFENG [CN]) 8 November 2018 (2018-11-08) * figures 2,3a,3b * | 4,10,14 | |

TECHNICAL FIELDS
SEARCHED      (IPC)

G05D

The present search report has been drawn up for all claims

| Place of search | Date of completion of the search | Examiner |
|---|---|---|
| Munich | 28 June 2023 | Alesandrini, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9515

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | | Publication date | Patent family member(s) | | Publication date |
|---|---|---|---|---|---|
| US 2022034633 | A1 | 03-02-2022 | NONE | | |
| US 2021188431 | A1 | 24-06-2021 | JP | 2021099181 A | 01-07-2021 |
| | | | US | 2021188431 A1 | 24-06-2021 |
| US 2018321693 | A1 | 08-11-2018 | CN | 110268356 A | 20-09-2019 |
| | | | EP | 3619591 A1 | 11-03-2020 |
| | | | US | 2018321693 A1 | 08-11-2018 |
| | | | WO | 2018204772 A1 | 08-11-2018 |

EPO FORM P0459

For more details about this annex : see Official Journal of the European Patent Office, No. 12/82

**EP 4 239 434 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63315169